# EUROPEAN PATENT SPECIFICATION

(11) **EP 1 519 614 B1**
(45) Date of publication and mention of the grant of the patent: **31.10.2007**
(21) Application number: 04255625.8
(22) Date of filing: 16.09.2004
(51) Int. Cl.: H04Q 7/38

(54) **Method of dynamic rate splitting**
Dynamisches Ratenteilungsverfahren
Procédé de distribution dynamique de débit

(30) Priority: 29.09.2003 US 673932
(43) Date of publication of application: 30.03.2005
(73) Proprietor: Lucent Technologies Inc., Murray Hill, New Jersey 07974-0636 (US)
(72) Inventor: Hu, Tech, Budd Lake, New Jersey 07828 (US)
(74) Representative: Sarup, David Alexander

(56) References cited:
- US-A1- 2003 174 645
- US-B1- 6 400 954
- "Universal Mobile Telecommunications System (UMTS); Multimedia Broadcast/Multicast Service (MBMS); Stage 1 (3GPP TS 22.146 version 5.2.0 Release 5); ETSI TS 122 146" ETSI STANDARDS, EUROPEAN TELECOMMUNICATIONS STANDARDS INSTITUTE, SOPHIA-ANTIPO, FR, vol. 3-SA1, no. V520, March 2002 (2002-03), XP014007342 ISSN: 0000-0001

## Description

### BACKGROUND OF THE INVENTION

### I. FIELD OF THE INVENTION

The present invention relates to telecommunications, and more particularly, to wireless communications.

### II. DESCRIPTION OF THE RELATED ART

Wireless communications systems provide wireless service to a number of wireless or mobile units situated within a geographic region. The geographic region supported by a wireless communications system is divided into spatially distinct areas commonly referred to as "cells." Each cell, ideally, may be represented by a hexagon in a honeycomb pattern. In practice, however, each cell may have an irregular shape, depending on various factors including the topography of the terrain surrounding the cell. Moreover, each cell is further broken into two or more sectors. Each cell is commonly divided into three sectors, each having a range of 120 degrees, for example.

A conventional cellular system comprises a number of cell sites or base stations geographically distributed to support the transmission and reception of communication signals to and from the wireless or mobile units. Each cell site handles voice communications within a cell. Moreover, the overall coverage area for the cellular system may be defined by the union of cells for all of the cell sites, where the coverage areas for nearby cell sites overlap to ensure, where possible, contiguous communication coverage within the outer boundaries of the system's coverage area.

Each base station comprises at least one radio and at least one antenna for communicating with the wireless units in that cell. Moreover, each base station also comprises transmission equipment for communicating with a Mobile Switching Center ("MSC"). A mobile switching center is responsible for, among other things, establishing and maintaining calls between the wireless units, between a wireless unit and a wireline unit through a public switched telephone network ("PSTN"), as well as between a wireless unit and a packet data network ("PDN"), such as the Internet. A base station controller ("BSC") administers the radio resources for one or more base stations and relays this information to the MSC.

When active, a wireless unit receives signals from at least one base station over a forward link or downlink and transmits signals to at least one base station over a reverse link or uplink. Several approaches have been developed for defining links or channels in a cellular communication system, including time-division multiple access ("TDMA"), code-division multiple access ("CDMA") and orthogonal-frequency division multiple access ("OFDMA"), for example.

In TDMA communication systems, the radio spectrum is divided into time slots. Each time slow allows only one user to transmit and/or receive. Thusly, TDMA requires precise timing between the transmitter and receiver so that each user may transmit their information during their allocated time.

In a CDMA scheme, each wireless channel is distinguished by a distinct channelization code (e.g., spreading code, spread spectrum code or Walsh code). Each distinct channelization code is used to encode different information streams. These information streams may then be modulated at one or more different carrier frequencies for simultaneous transmission. A receiver may recover a particular stream from a received signal using the appropriate channelization code to decode the received signal.

In OFDMA systems, a carrier signal may be defined by a number (e.g., 1024) of sub-carriers or tones transmitted using a set of mathematically time orthogonal continuous waveforms. Each wireless channel may be distinguished by a distinct channelization tone. By employing orthogonal continuous waveforms, the transmission and/or reception of the tones may be achieved, as their orthogonality prevents them from interfering with one another.

With the explosion of wireless telephony, service providers have been exploring new growth opportunities. One such prospect has centered on providing subscription-based services to wireless users. For the purposes of the present disclosure, subscription-based services may require a subscription and/or additional fees from the service provider or content provider to gain access the service(s). Moreover, subscription-based services may provide tiers of service.

One example of a subscription-based service may be multicast services. For the purposes of the present disclosure, multicast services correspond to the transmission of content by one source to multiple receivers having privileges (e.g., subscribers). Multicast services, such as Multimedia Broadcast Multicast Services ("MBMS"), for example, may be provide growth prospects by offering multimedia content anywhere within the cell with a subscription. In one example, multimedia content, such as streaming video and/or audio, may be multicast from an entertainment or news service provider to subscribers through the wireless communications network using MBMS.

Paratainen (U.S. Patent Application Publication No- 2003/0174645) describes a technique for allocating radio blocks to fulfill a bit rate requirement of a particular multicast (MBMS) service such that the same bit rate can be provided by allocating multiple time slots over a reduced number of block periods. Khan (U.S patent No. 6,400,954) describes a technique for adjusting transmission rates over an air interface based on loading of an access network.

Multicast services, however, raise issues regarding infrastructure. To make a multicast service available to wireless users within the cell may require a substantial bandwidth increase. Moreover, multicast services may be relatively delay-intolerant, requiring near-real-time transmission and reception. Multicast services, such as MBMS, may also require significant resources, including transmit power, from the network infrastructure, such as a wireless network's base station (e.g., Node B), to enable each of the privileged multiple receivers to access the premium service.

Consequently, a demand exists for a method of supporting subscription-based services, such as multicast services, which may reduce power consumption.

### SUMMARY OF THE INVENTION

Methods and according to the present invention are set out in the independent claims, to which the reader is now referred. Preferred features are laid out in the dependent claims.

The present invention provides a method of supporting subscription-based services, such as multicast services, that may increase power conservation. More particularly, the method of the present invention provides a rate splitting technique to reduce continuous demand on the resources of the network infrastructure elements, such as a wireless network's base station. For the purposes of the present disclosure, rate splitting may correspond with dividing a subscription-based service, such as a multicast service, into at least a first and a second service type, each service type offering a different grade of quality and/ or content and/or service rate, such as a service rate (e.g., multicast rate). It should also be noted that each multicast rate, for the purposes of the present disclosure, might correspond with one of several multicast streams of content and/ or one of several rates in which the stream(s) of content may be multicast. In an illustrative example of rate splitting for multicast services, a basic service and a premium service are supported, where the basic service may offer monochrome images at a first multicast rate, while the premium service may offer streaming color images at a second multicast rate relatively higher than the first multicast rate.

In an exemplary embodiment, a method of the present invention includes assigning at least one of a plurality of service rates to each of a plurality of subscription-based service types associated with the subscription-based service in response to at least one of channel conditions, power requirements, service subscription type, desired content, other services and equipment class of each subscriber. In another exemplary embodiment, a method of the present invention includes receiving a subscription-based service at an assigned one of a plurality of service rates associated with at least one of a plurality of subscription-based service types of the subscription-based service, the assigned service rate corresponding with at least one of service subscription desired channel conditions, type, content, power requirements, other services and equipment class.

These and other embodiments will become apparent to those skilled in the art from the following detailed description read in conjunction with the appended claims and the drawings attached hereto.

### BRIEF DESCRIPTION OF THE DRAWINGS

The present invention will be better understood from reading the following description of non-limiting embodiments, with reference to the attached drawings, wherein below:
**FIG. 1** depicts a block diagram of a network architecture supporting the present invention;
**FIG. 2** depicts a flow chart according to one embodiment of the present invention; and
**FIG. 3** depicts a flow chart according to another embodiment of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

The present invention provides a method of supporting subscription-based services, such as multicast services, that may increase power conservation. More particularly, the method employs a rate splitting technique to reduce a continuous demand on the resources of the network infrastructure elements, such as a wireless network's base station (e.g., Node B). It should be noted that rate splitting may correspond with dividing a subscription-based service, such as a multicast service, into at least a first and a second service type, each service type offering a different grade of quality and/or content and/or service rate (e.g., multicast rate). For the purposes of the present disclosure, each multicast rate might correspond with one of several multicast streams of content and/or one of several rates in which the stream(s) of content may be multicast.

By way of the present invention, a method is provided for varying service types or grades thru the use of rate splitting. For example, cell coverage may be varied for different service types to conserve resources of the network infrastructure elements, such as the power at the base station. Likewise, the content multicast may be pared down (e.g., offering monochrome images in place of streaming color images) to reduce power consumption. The service types or grades available may also be varied in response to the power consumed at the base station, for example. At the wireless unit, the service type may be varied, for example, based on the other services the user may be concurrently accessing.

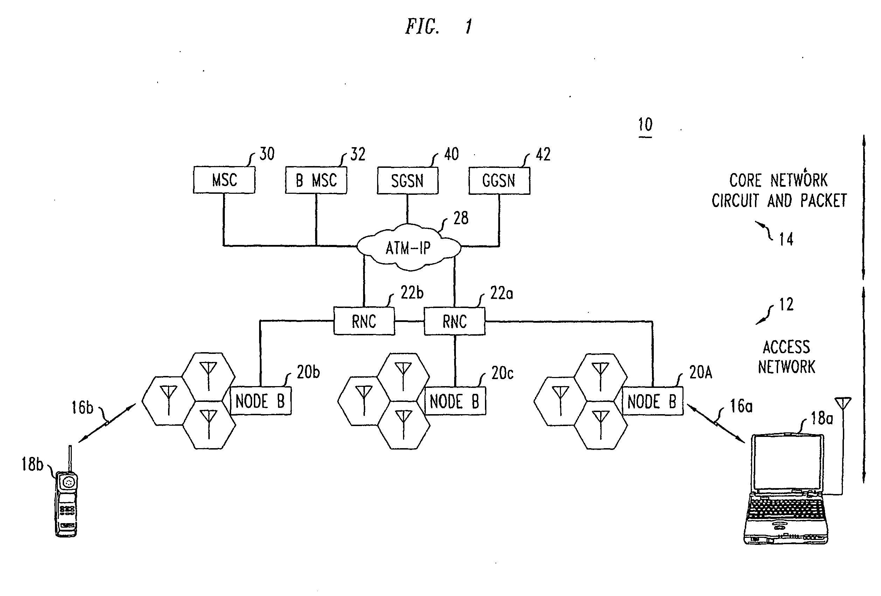

Referring to **FIG. 1**, a typical wireless communications network **10** supportive of multicast services is shown. Here, wireless communications network **10** may accommodate one of a number of architectures, including CDMA2000 and Universal Mobile Telecommunications System ("UMTS"), for example. Network **10** may be divided into a radio access network ("RAN") **12** and a core network **14.** RAN **12** includes equipment used to support wireless interfaces, **16a** and **16b,** between multicast supportive, wireless units, **18a** and **18b,** and network **10.** Furthermore, RAN **12** comprises a plurality of base stations or Node Bs, **20a** through **20c,** as well as a number of radio network controllers ("RNCs") or base station controllers ("BSCs"), **22a** and **22b.** The signaling exchange between the Node Bs and RNCs is commonly referred to as the I_{ub} interface, while the interface between RNCs themselves is commonly referred to as the Iᵤᵣ interface. The transport mechanism of both the I_{ub} and Iᵤᵣ interfaces may be generally based on an asynchronous transfer mode ("ATM") scheme.

Core network **14** includes network elements that support circuit based communications, as well as packet-based communications. In establishing a typical circuit channel to handle circuit-based communications between wireless unit **18b** and a public switched telephone network ("PSTN") or another wireless unit, for example, base station **20b** may receive (in the uplink) and transmit (in the downlink) coded information (e.g., circuit voice or circuit switched data). This coded information may be transmitted over wireless interface or link **16b.**

RNCs **22a** and **22b** may each perform a number of functions. These functions may include, for example, frame selection, encryption, and handling of access network mobility. In establishing a typical circuit channel to handle circuit-based communications, RNC **22b** may, for example, forward the circuit voice and circuit switched data over a network, such as an asynchronous transfer mode ("ATM")/Internet Protocol ("IP") network to a mobile switching center ("MSC") **30.** MSC **30** is responsible for call processing and macromobility on the MSC level. MSC **30** initiates the connectivity between wireless unit **18b** and the PSTN **24,** for example.

In establishing a packet channel to handle packet-based communications between wireless unit **18a** and a packet data network ("PDN"), such as the Internet, base station **20a** receives (in the uplink) and transmits (in the downlink), the coded information over the wireless interface or link **16a.** In the uplink direction, RNC **22a** reassembles the packets as sent by wireless unit **18a** and forwards them to a Serving GPRS Support Node ("SGSN") **40.** In the downlink direction, RNC **22a** receives the packets and segments them into the right size packet to be transferred to the base station, which may perform its processing and the data across the wireless link **16a.** SGSN **40** provides packet data session processing and macromobility support for network **10**. SGSN **40** establishes connectivity between wireless unit **18a** and the PDN, for example. A Gateway GPRS Support Node ("GGSN") **42** may be employed to act as the gateway to external PDNs. Upon request from SGSN **40,** GGSN **42** may establish a packet data protocol (PDP) session.

As shown, core network **14** also employs network elements supportive of multicast services. More particularly, core network **14** also includes a broadcast mobile switching center ("BMSC") **32**. BMSC **32** is responsible for processing and macromobility of the multimedia content to be multicast. BMSC **32** establishes connections between each wireless subscriber receiving a multicast - e.g., wireless units **18a** and **18b** - and a service provider generating and transmitting the multimedia content through core network **14**. These established multicast connections are managed by RNC, **22a** and **22b.** In this scenario, each RNC, **22a** and **22b,** may perform rate splitting to conserve network resources, such as power consumption at base stations, **20a** and **20c,** for example. Alternatively, rate splitting may be performed further upstream, at BMSC **32**, for example.

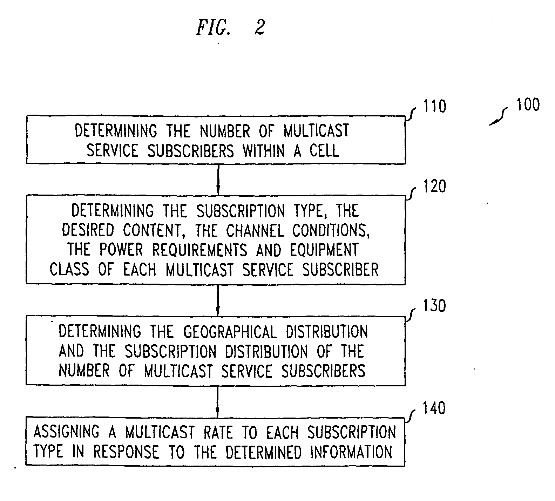

Referring to **FIG. 2**, an exemplary flow chart **100** of an embodiment of the present invention is illustrated. More particularly, flow chart **100** depicts a method of dynamic rate splitting. While flow chart **100** is described in conjunction with multicast services, such as MBMS, it should be apparent to skilled artisans that the scheme presented may be employed in concert with any service that benefiting from different service types, levels or grades, for example.

The method corresponding with flow chart **100** initially determines the number of multicast service subscribers within a cell area of coverage (step **110**). This determining step may be realized by any one of a number of means. For example, upon logging into the network, each wireless unit subscriber may convey its subscription(s) to a corresponding base station. This subscription information may be transmitted to a base station controller, which, in turn, may transmit this information to a mobile switching center.

Once the number of subscribers is ascertained, the method may then determine information about each subscriber (step **120**). Individual subscriber information may indirectly illustrate the potential demands on wireless network infrastructure in supporting a multicasting service, for example, such as MBMS. By this step, information such as subscription type, desired content, channel condition, power requirements, other services and/or equipment class for each multicast subscriber may be determined. It should be noted that this step of determining additional information might be performed during or after the step of determining the number of multicast service subscribers.

Use of subscription type information may correspond with a rate splitting technique. Here, a service may be divided into at least a first and a second service type, such as basic, and premium service types. Each subscription service type each may offer a varying degree or grade of quality and/or content and/or multicast data rate for the subscribed service relative to the other. For example, a basic service and a premium service are supported, where the basic service may offer monochrome images at least a first multicast rate, while the premium service may offer streaming color images at least a second multicast rate relatively higher than the first multicast rate. Consequently, each subscription type may correspond with supporting at least one multicast rate.

Moreover, desired content may also be employed in conjunction correspond with a rate splitting technique. Here, the user of a wireless unit may be a subscriber to a higher grade of quality and/or content and/or multicast data rate but wish to access a relatively lower subscription service type. Reasons for selecting a lower grade service may include fees or multicast access time charges, for example.

The channel condition of each wireless unit may also be determined during this step. The channel condition may be a reflection of the attenuation patterns from the perspective of the wireless unit subscriber and/or the base station covering the relevant cell. The channel condition may be derived from a channel quality information signal corresponding with a signal-to-noise or signal-to-interference ratio.

Each wireless unit subscriber may have minimum power requirements to operate within the cell. Considerations regarding minimum power requirements may include signal strength from the perspective of the wireless unit subscriber and/or the base station covering the relevant cell. Additionally, these power requirements may also be conditioned on the location of the unit relative to the base station. If the wireless unit is mobile, these power requirements may vary with time.

Subscriber specific information may also include other services. Each subscriber, during this determining step, may be accessing one or more other wireless services. For example, one subscriber may be receiving a voice call, while also accessing high-speed downlink packet access ("HSDPA") and/or high-speed uplink packet access services ("HSUPA").

Furthermore, each subscriber may have information associated with its particular equipment class. While operating within the wireless network, subscribers may be built with the capability to process one or more channelization terms - channelization codes (CDMA) and/or tones (OFDMA). Consequently, the number of channelization terms attributed to each subscriber may correspond with the equipment class of the subscriber.

With particulars for each subscriber determined, the method may then determine other information regarding the subscriber populace within the cell (step **130**). Subscriber populace information may directly illustrate the potential demands on the network infrastructure in supporting a multicasting service, for example, such as MBMS. It should be once again noted that this step of determining might be performed during or after the step of determining the number of multicast service subscribers and/or during or after the step of subscriber information.

By this step of determining subscriber populace information, the geographical distribution of the number of subscribers may be ascertained. For example, the geographical distribution may include subscribers within close proximity of the cell's associated base station requiring fewer network resources for multicasting, subscribers at the outer periphery of the cell's associated base station requiring greater network resources for multicasting, or some variation in geographical distribution therebetween.

Moreover, this step of determining subscriber populace information may also establish subscription distribution within the cell. Here, the subscription type for each of the subscribers may be grouped and subsequently examined. Alternatively, subscription distribution may be subsequently examined in conjunction with other individual subscriber or subscriber populace information, such as, for example, geographical distribution of subscribers.

Once individual subscriber and subscriber populace information have been determined, the present rate splitting method may then be completed. More particularly, the method assigns a multicast rate to each multicast service subscription type (step **140**). Consequently, the desired information may be multicast to service subscribers of each service subscription type at the corresponding multicast rate assigned. As noted herein, for the purposes of the present disclosure, multicast rate may correspond with one of several multicast streams of content and/or one of several rates in which the stream(s) of content may be multicast.

In an effort to conserve network infrastructure resources and/or the resources at the user subscriber's wireless unit, the multicast rate assigned to each multicast service subscription type may take the individual subscriber and/or subscriber populace information into consideration. Thusly, while each subscriber may have a service type corresponding with one or more particular multicast rates, the multicast rate assigned to that multicast service subscription type may vary in accordance with individual subscriber and/or subscriber populace information. This varying of a multicast rate to each subscription type may involve prioritization. Here, the multicast rate assigned to each multicast service subscription type may aim to maximize the total number of subscribers that may receive the multicast. Alternatively, prioritization may take into consideration the goal of offering subscribers with the highest service level (or lowest service level) a maximum multicast rate first before addressing the remaining lower service level(s).

Various other combinations are contemplated herein by the present disclosure. For example, the availability of one or more multicast service subscription types may be also scaled. This scaling may be performed in response to base station resources in use, such as transmit power. As a consequence, this scaling step may include dropping and/or adding the availability of at least one of the multicast service subscription types.

In an alternate example of prioritization, the availability of at least one multicast service subscription type may be scaled in response to a demand from the multicast service subscribers associated with at least another the multicast service subscription type. This demand may correspond with power or subscription revenue, for example. Thusly, the step of scaling may include dropping and/or adding the availability of at least one of the multicast service subscription types before performing the step of assigning.

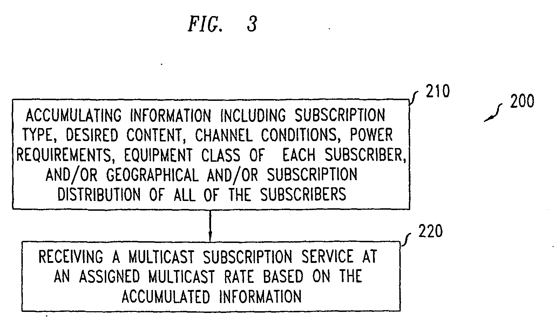

Referring to **FIG. 3,** an exemplary flow chart **200** of another embodiment of the present invention is illustrated. More particularly, flow chart **200** depicts a method of dynamic rate splitting. It should be noted that while flow chart **200** is described in conjunction with multicast services, such as MBMS, the method presented may be employed in concert with any service that benefiting from different service types, levels or grades, for example.

The method corresponding with flow chart **200** initially involves accumulating subscriber specific information to the wireless network, such as, for example, the base station controller by means of the base station (step **210**). The subscriber specific information here may include the subscription type (e.g., basic, enhanced or premium), the desired content (e.g., black and white images or streaming color), the channel conditions (e.g., signal to noise or signal to interference ratio), power requirements (e.g., including signal strength from the perspective of the wireless unit subscriber and/or the base station), other services (e.g., voice, HSDPA and/or HSUPA) and/or equipment class (e.g., channelization codes assigned) of that subscriber.

As stated hereinabove, some or all of this subscriber specific information may be made available upon logging into the network. For example, each wireless unit subscriber may convey its subscription(s) to a corresponding base station over the uplink access channel after authentication. This subscription information may be transmitted to a base station controller, which, in turn, may transmit this information to a mobile switching center.

It should be noted that the step of accumulating might also include collecting information regarding the subscriber populace within the cell. This subscriber populace information may include, for example, geographical distribution of the number of subscribers. For example, the geographical distribution may include subscribers within close proximity of the cell's associated base station requiring fewer network resources for multicasting, subscribers at the outer periphery of the cell's associated base station requiring greater network resources for multicasting, or some variation in geographical distribution therebetween.

Moreover, this step of accumulating may further include collecting information associated with subscription distribution within the cell. Subscription type for each of the subscribers may be grouped and subsequently examined. Alternatively, subscription distribution may be subsequently examined in conjunction with other individual subscriber or subscriber populace information, such as, for example, geographical distribution of subscribers.

Once subscriber specific information and/or subscriber populace within the cell has been accumulated, the method corresponding with flow chart **200** then receives a multicast subscription service at an assigned multicast rate (step **220**). The assignment of the multicast rate may be based on the accumulated information of the previous step. As noted hereinabove, for the purposes of the present disclosure, multicast rate may correspond with one of several multicast streams of content and/or one of several rates in which the stream(s) of content may be multicast.

In an effort to conserve network infrastructure resources and/or the resources at the user subscriber's wireless unit, the multicast rate assigned to the multicast service subscription type may take the individual subscriber and/or subscriber populace information into consideration. Thusly, while the subscriber may have a service type corresponding with one or more particular multicast rates, the multicast rate assigned to that multicast service subscription type may vary in accordance with individual subscriber and/or subscriber populace information. This varying of a multicast rate to the multicast service subscription type may involve prioritization. Here, the multicast rate assigned to the multicast service subscription type, from the perspective of the network and service(s) provider, may aim to maximize the total number of subscribers that may receive the multicast. Alternatively, prioritization may take into consideration the goal of offering subscribers with the highest service level (or lowest service level) a maximum multicast rate first before addressing the remaining lower service level(s), again from the perspective of the network and service(s) provider.

Various other combinations are contemplated herein by the present disclosure. For example, the availability of one or more multicast service subscription types may be also scaled. This scaling may be performed in response to the base station resources, such as transmit power. As a consequence, this scaling step may include dropping and/or adding the availability of at least one of the multicast service subscription.

In an alternate example of prioritization, the availability of at least one multicast service subscription type may be scaled in response to a demand from the multicast service subscriber associated with at least another service, for example. This demand may correspond with power required by the wireless unit, the availability of channelization codes and/or subscription fees, for example. Thusly, the step of scaling may include dropping and/ or adding the availability of at least one of the multicast service subscription types before receiving the multicast service at an assigned rate.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller and/or mobile switching center, and employed in conjunction with various multiple access schemes, such as CDMA and OFDMA, for example.

Moreover, processing circuitry required to implement and use the described system maybe implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein

## Claims

1. A method of wireless communication with a number of subscribers to a subscription-based multicast service, the method comprising:
assigning at least one of a plurality of service rates to each of a plurality of subscription-based service types associated with the subscription-based multicast service in response to at least one of channel conditions, power requirements, service subscription type, desired content, other services and equipment class of each subscriber.

2. A method of wireless communication with a number of subscribers to a subscription-based multicast service comprising:
receiving the subscription-based multicast service at an assigned one of a plurality of service rates associated with at least one of a plurality of subscription-based service types of the subscription-based service, the assigned service rate corresponding with at least one of service subscription desired channel conditions, type, content, power requirements, other services and equipment class.

3. The method of Claims 1 or 2, wherein the at least one service rate comprises at least one multicast rate, each of the subscription-based service type comprises at least a multicast service subscription type, and the multicast service subscription type comprises at least one of a basic type and a premium type.

4. The method of Claim 3, wherein the least one multicast rate is assigned to each multicast service multicast service subscription type in further response to determining a geographical distribution of the number of multicast service subscribers and determining a subscription distribution of the number of multicast service subscribers.

5. The method of Claim 4, comprising:
multicasting information to each of the multicast service subscribers at each multicast service subscription type's assigned multicast rate.

6. The method of Claim 5, wherein the step of assigning comprises:
prioritizing the assigning of the at least one multicast rate to support the multicasting information to at least one of a maximum number of multicast service subscribers, a maximum number of multicast service subscribers having the premium service type, and a maximum number of multicast service subscribers having the basic service type.

7. The method of Claim 6_{,} comprising:
scaling an availability of at least one of the multicast service subscription types in response to at least one of a demand from the multicast service subscribers associated with at least another the multicast service subscription type and to base station resources in use, wherein the step of scaling comprises at least one of dropping and adding the availability of at least one of the multicast service subscription types, the demand corresponds with at least one of power and subscription revenue, the equipment class corresponds with at least one supporting channelization code, and the other services comprises at least one of voice, HSDP A and HSUP A.

8. The method of Claim 3, comprising:
prioritizing the other services and the multicast service subscription service.

9. The method of Claim 8, comprising:
scaling the multicast service subscription types available for assigning in response to a change in demand for the other services.

10. The method of Claim 9, wherein the step of scaling comprises at least one of dropping and adding support for at least one of the multicast service subscription types, the demand corresponds with at least one of power, channelization codes, and subscription fees, the other services comprises at least one of voice, HSDP A and HSUP A, and the equipment class corresponds with at least one supporting channelization code.

## Patentansprüche

1. Verfahren der drahtlosen Kommunikation mit einer Anzahl von Teilnehmern an einem auf Bestellung basierenden Multicast-Dienst, mit folgenden Schritten:
Zuweisen mindestens einer einer Mehrzahl von Dienstraten zu jedem einer Mehrzahl von dem auf Bestellung basierenden Multicast-Dienst zugeordneten auf Bestellung basierenden Dienstarten als Reaktion auf mindestens eines von Kanalzuständen, Leistungserfordernissen, Dienstbestellungsart, gewünschtem Inhalt, anderen Diensten und Geräteklasse jedes Teilnehmers.

2. Verfahren der drahtlosen Kommunikation mit einer Anzahl von Teilnehmern an einem auf Bestellung basierenden Multicast-Dienst, mit folgendem:
Empfangen des auf Bestellung basierenden Multicast-Dienstes mit einer zugewiesenen einer Mehrzahl von mindestens einer einer Mehrzahl von auf Bestellung basierenden Dienstarten des auf Bestellung basierenden Dienstes zugeordneten Dienstraten, wobei die zugewiesene Dienstrate mindestens einem von einer Dienstbestellung gewünschten Kanalzuständen, Art, Inhalt, Leistungserfordernissen, sonstigen Diensten und Geräteklassen spricht.

3. Verfahren nach Ansprüchen 1 oder 2, wobei die mindestens eine Dienstrate mindestens eine Multicast-Rate umfaßt, jede der auf Bestellung basierenden Dienstarten mindestens eine Multicast-Dienstbestellungsart umfaßt und die Multicast-Dienstbestellungsart mindestens eine einer Grundart und einer vorrangigen Art umfaßt.

4. Verfahren nach Anspruch 3, wobei die mindestens eine Multicast-Rate jeder Multicast-Dienstbestellungsart als weitere Reaktion auf die Bestimmung einer geographischen Verteilung der Anzahl von Multicast-Dienstteilnehmern und die Bestimmung einer Bestellungsverteilung der Anzahl von Multicast-Dienstteilnehmern zugewiesen wird.

5. Verfahren nach Anspruch 4, mit folgendem:
Multicast-Sendung von Informationen zu jedem der Multicast-Dienstteilnehmer mit der jeder Multicast-Dienstteilnahmeart zugewiesenen Multicast-Rate.

6. Verfahren nach Anspruch 5, wobei der Schritt des Zuweisens folgendes umfaßt:
Priorisieren der Zuweisung der mindestens einen Multicast-Rate zur Unterstützung der Multicast-Sendung von Informationen zu mindestens einem einer maximalen Anzahl von Multicast-Dienstteilnehmern, wobei eine maximale Anzahl von Multicast-Dienstteilnehmern die vorrangige Dienstart aufweist und eine maximale Anzahl von Multicast-Dienstteilnehmern die Grunddienstart aufweist.

7. Verfahren nach Anspruch 6 mit folgendem:
Skalieren einer Verfügbarkeit von mindestens einer der Multicast-Dienstteilnahmearten als Reaktion auf mindestens eines eines Verlangens von den mindestens einer anderen der Multicast-Dienstteilnahmearten zugeordneten Multicast-Dienstteilnehmern und auf im Gebrauch befindliche Basisstationsressourcen, wobei der Schritt des Skalierens mindestens eines von Fallenlassen und
Zufügen der Verfügbarkeit mindestens einer der Multicast-Dienstteilnahmearten umfaßt, das Verlangen mindestens einem von Leistung und
Bestellungseinkommen entspricht, die Geräteklasse mindestens einem unterstützenden Kanalisierungscode entspricht, und die anderen Dienste mindestens eines von Sprache, HSDP A und HSUP A umfassen.

8. Verfahren nach Anspruch 3 mit folgendem:
Priorisieren der anderen Dienste und des Multicast-Dienstteilnahmedienstes.

9. Verfahren nach Anspruch 8 mit folgendem:
Skalieren der zur Zuweisung verfügbaren Multicast-Dienstteilnahmearten als Reaktion auf eine Änderung des Bedarfs für die anderen Dienste.

10. Verfahren nach Anspruch 9, wobei der Schritt des Skalierens mindestens eines von Fallenlassen und Zufügen von Unterstützung für mindestens eine der Multicast-Dienstteilnahmearten umfaßt, der Bedarf mindestens einem von Leistung, Kanalisierungscodes und Bestellungsgebühren entspricht, die anderen Dienste mindestens einen von Sprache, HSDP A und HSUP A entsprechen und die Geräteklasse mindestens einem unterstützenden Kanalisierungscode entspricht.

## Revendications

1. Procédé de communication sans fil avec un certain nombre d'abonnés à un service de multidiffusion à base d'abonnement, le procédé comprenant :
l'attribution d'au moins un parmi une pluralité de tarifs de service à chacun d'une pluralité des types de service à base d'abonnement associée au service de multidiffusion à base d'abonnement en réponse à au moins un parmi des conditions de canal, des exigences de puissance, un type d'abonnement de service, un contenu souhaité, d'autres services et une classe d'équipement de chaque abonné.

2. Procédé de communication sans fil avec un certain nombre d'abonnés à un service de multidiffusion à base d'abonnement, le procédé comprenant :
la réception du service de multidiffusion à base d'abonnement à un tarif attribué parmi une pluralité de tarifs de service associée à au moins un parmi une pluralité de types de service à base d'abonnement du service à base d'abonnement, le tarif de service attribué correspondant à au moins un parmi des conditions de canal souhaitées d'abonnement de service, un type, un contenu, des exigences de puissance, d'autres services et une classe d'équipement.

3. Procédé selon les revendications 1 ou 2, dans lequel l'au moins un tarif de service comprend au moins un tarif de multidiffusion, chacun du type de service à base d'abonnement comprend au moins un type d'abonnement du service de multidiffusion, et le type d'abonnement du service de multidiffusion comprend au moins un parmi un type de base et un type supérieur.

4. Procédé selon la revendication 3, dans lequel l'au moins un tarif de multidiffusion est attribué à chaque type d'abonnement de service de multidiffusion du service de multidiffusion en réponse supplémentaire à la détermination d'une distribution géographique du nombre d'abonnés du service de multidiffusion et la détermination d'une distribution d'abonnement du nombre d'abonnés du service de multidiffusion.

5. Procédé selon la revendication 4, comprenant :
la multidiffusion d'informations à chacun des abonnés du service de multidiffusion à chaque tarif de multidiffusion attribué du type d'abonnement du service de multidiffusion.

6. Procédé selon la revendication 5, dans lequel l'étape d'attribution comprend :
la hiérarchisation de l'attribution de l'au moins un tarif de multidiffusion pour prendre en charge les informations de multidiffusion à au moins un parmi un nombre maximum d'abonnés du service de multidiffusion, un nombre maximum d'abonnés du service de multidiffusion ayant le type de service supérieur et un nombre maximum d'abonnés du service de multidiffusion ayant le type de service de base.

7. Procédé selon la revendication 6, comprenant :
la mise à l'échelle d'une disponibilité d'au moins un parmi des types d'abonnement du service de multidiffusion en réponse à au moins une parmi une demande provenant des abonnés du service de multidiffusion associée à au moins un autre du type d'abonnement du service de multidiffusion et
des ressources de stations de base en service, dans lequel l'étape de mise à l'échelle comprend au moins un parmi l'abandon et l'insertion de la disponibilité d'au moins un parmi des types d'abonnement du service de multidiffusion, la demande correspond à au moins un parmi la puissance et le revenu d'abonnement, la classe d'équipement correspond à au moins un code de canalisation de prise en charge, et les autres services comprennent au moins un parmi la voix, l'HSDP A et l'HSUP A.

8. Procédé selon la revendication 3, comprenant:
la hiérarchisation des autres services et du service d'abonnement du service de multidiffusion.

9. Procédé selon la revendication 8, comprenant :
la mise à l'échelle des types d'abonnement du service de multidiffusion disponibles pour l'attribution en réponse à un changement dans une demande pour les autres services.

10. Procédé selon la revendication 9, dans lequel l'étape de mise à l'échelle comprend au moins un parmi l'abandon et l'insertion d'une prise en charge pour au moins un parmi les types d'abonnement du service de multidiffusion, la demande correspond à au moins un parmi une puissance, des codes de canalisation et des frais d'abonnement, les autres services comprennent au moins un parmi la voix, l'HSDP A et l'HSUP A, et la classe d'équipement correspond à au moins un code de canalisation de prise en charge.
